# EUROPÄISCHE PATENTANMELDUNG

(11) **EP 3 822 119 A1**
(43) Veröffentlichungstag der Anmeldung: **19.05.2021**
(21) Anmeldenummer: 20197228.8
(22) Anmeldetag: 21.09.2020
(51) Int. Cl.: B60P 7/08

(54) **FAHRZEUGAUFBAU MIT EINER VORRICHTUNG ZUR LADEGUTSICHERUNG**

(30) Priorität: 14.11.2019 AT 509812019
(71) Anmelder: Easy Lock GmbH, 4020 Linz (AT)
(72) Erfinder: Gebesmair, Manfred, 4550 Kremsmünster (AT)
(74) Vertreter: Hübscher & Partner Patentanwälte GmbH

(57) **Zusammenfassung**

Es wird ein Fahrzeugaufbau (3) mit einer Vorrichtung zur Ladegutsicherung beschrieben, die einen an Anschlagpunkten (11, 12) auf einander gegenüberliegenden Längsseiten einer Ladefläche (2) angeschlagenen, mit einer Spanneinrichtung (13) versehenen Spanngurt (10) sowie eine Spanngurtführung umfasst, die zwei um Umlenkrollen (16) im Eckbereich zwischen den Längswänden (4, 5) und der Decke (6) des Fahrzeugaufbaus (3) aus einem Seilspeicher (17) gegen Federkraft ausziehbare Seiltrume (14) aufweist, die an ihren ausziehbaren Enden eine den Spanngurt (10) verschiebbar führende Gurtaufnahme (15) tragen. Um vorteilhafte Sicherungsbedingungen zu schaffen, wird vorgeschlagen, dass die Gurtaufnahmen (15) auf der vom Seiltrum (14) abgekehrten Seite einen beidseitig in Führungsrichtung des Spanngurts (10) über die Gurtaufnahme (15) vorstehenden, biegeelastischen, streifenförmigen Kantenschutz (23) ausbilden.

## Beschreibung

Die Erfindung bezieht sich auf einen Fahrzeugaufbau mit einer Vorrichtung zur Ladegutsicherung, die einen an Anschlagpunkten auf einander gegenüberliegenden Längsseiten einer Ladefläche angeschlagenen, mit einer Spanneinrichtung versehenen Spanngurt sowie eine Spanngurtführung umfasst, die zwei um Umlenkrollen im Eckbereich zwischen den Längswänden und der Decke des Fahrzeugaufbaus aus einem Seilspeicher gegen Federkraft ausziehbare Seiltrume aufweist, die an ihren ausziehbaren Enden eine den Spanngurt verschiebbar führende Gurtaufnahme tragen.

Zur Sicherung von Ladegütern auf der Ladefläche von Fahrzeugen werden an Anschlagpunkten auf einander gegenüberliegenden Längsseiten der Ladefläche angreifende Spanngurte verwendet, die über das Ladegut geführt und mithilfe einer Spanneinrichtung festgezurrt werden. Um diese Spanngurte nicht von Hand aus über das zu sichernde Ladegut legen zu müssen, ist es bekannt (DE 101 38 771 A1, DE 102 18 465 A1, DE 10 2010 022 855 A1), die Spanngurte mithilfe von je zwei Zugmitteln zu führen, die unter einer Federbeaufschlagung versuchen, die Spanngurte in die Eckbereiche zwischen den Längswänden und der Decke des Fahrzeugaufbaus zu ziehen, sodass der Spanngurt in einer von der Spanneinrichtung gelösten Ausgangstellung von seiner Befestigung an einem Anschlagpunkt der Ladefläche nach oben in den Deckenbereich geführt und dort vom Zugmittel gehalten wird, um an der Angriffsstelle des Zugmittels umgelenkt und entlang der Decke zum gegenüberliegenden Zugmittel zu verlaufen, von dem dann die Restlänge des Spanngurts herabhängt. Durch diese Spanngurtführung wird das Beladen des Laderaums von der Fahrzeuglängsseite mit den herabhängenden Spanngurtenden unbehindert durch die Spanngurte möglich, deren herabhängenden Enden zur Ladegutsicherung lediglich unter einem Ausziehen der Zugmittel mit der am Anschlagpunkt auf der Ladeseite befestigten Spanneinrichtung verbunden werden müssen, um den Spanngurt unter einer Anlage am Ladegut festzurren zu können. Zum Öffnen der Spanngurte sind die Spanneinrichtungen zu lösen, wonach die federbeaufschlagten Zugmittel die Spanngurte wieder in die Ausgangslage ziehen.

Um einen entlang der Spanngurte verschiebbaren Angriff der Zugmittel an den Spanngurten zu sichern, werden die Spanngurte in Gurtaufnahmen am Ende der Zugmittel verschiebbar geführt. Unabhängig davon, ob diese Gurtaufnahmen Laufrollen oder Führungsösen für den Spanngurt bilden, besteht die Gefahr, dass die den Spanngurt auf der vom Zugmittel abgekehrten Seite führenden Teile der Gurtaufnahmen beim Festzurren des Spanngurts die Oberfläche des Ladeguts beschädigen, weil ja diese Teile, nämlich die Laufrollen oder die Ösenbügel, durch den Spanngurt mit erheblicher Kraft gegen das Ladegut gedrückt werden.

Der Erfindung liegt somit die Aufgabe zugrunde, einen Fahrzeugaufbau mit einer Ladegutsicherung, die eine Spanngurtführung durch zwei federnd beaufschlagte Seiltrume aufweist, mit vergleichsweise einfachen Mitteln so auszugestalten, dass eine Ladegutbeschädigung durch die Gurtaufnahmen der an den Spanngurten angreifenden Seiltrume praktisch ausgeschlossen werden kann.

Ausgehend von einem Fahrzeugaufbau der eingangs geschilderten Art löst die Erfindung die gestellte Aufgabe dadurch, dass die Gurtaufnahmen auf der vom Seiltrum abgekehrten Seite einen beidseitig in Führungsrichtung des Spanngurts über die Gurtaufnahme vorstehenden, biegeelastischen, streifenförmigen Kantenschutz ausbilden.

Dieser die Gurtaufnahme mit dem die Gurtaufnahme durchsetzenden Spanngurt gegenüber dem Ladegut abdeckende Kantenschutz bewirkt, dass alle im Bereich der Gurtaufnahme gegenüber dem Ladegut auftretenden Belastungen der Ladegutsicherung über den Kantenschutz verteilt auf die Oberfläche des Ladeguts abgetragen werden, sodass aufgrund der dadurch bedingten Druckverteilung eine Oberflächenbeschädigung des Ladeguts praktisch ausgeschlossen werden kann. Da der streifenförmige Kantenschutz in der unbelasteten Ausgangsstellung in Führungsrichtung des Spanngurts beidseitig über die Gurtaufnahme vorsteht und zufolge seiner biegeelastischen Eigenschaften erst beim Spannen des Spanngurts durch den Spanngurt an die Oberfläche des Ladeguts angedrückt wird, bedarf es keiner zusätzlichen Ausrichtung des Kantenschutzes von Hand aus. Der in Führungsrichtung des Spanngurts von der Gurtaufnahme abstehende Kantenschutz wird ja mit dem in der Gurtaufnahme verschiebbar geführten Spanngurt parallel zu diesem gegenüber dem Ladegut ausgerichtet und unter einer elastischen Biegung an das Ladegut angelegt. Die dabei auftretenden elastischen Rückstellkräfte bedingen, dass beim Lösen des Spanngurts der der Gurtaufnahme zugehörige Kantenschutz wieder in seine bezüglich der Führungsrichtung des Spanngurts ausgerichteten Ausgangslage zurückkehrt.

Besonders einfache Konstruktionsverhältnisse ergeben sich, wenn die Gurtaufnahmen eine Durchtrittsöffnung für den Spanngurt bilden, die auf der vom Seiltrum abgekehrten Seite durch einen den streifenförmigen Kantenschutz tragenden Auflageschenkel begrenzt ist, weil in diesem Fall die Gurtaufnahme zusammen mit dem Kantenschutz als einstückiger Bauteil aus Kunststoff hergestellt werden kann.

Um den Laderaum vorteilhaft nützen zu können, kann des Weiteren vorgesehen sein, dass die beiden Seiltrume Endabschnitte eines Seils bilden, dessen in einer hohlen Querstrebe der Decke angeordneter Seilspeicher einen verschiebefest und einen gegen Federkraft verschiebbar in der Querstrebe gelagerten Seilrollensatz umfasst, und dass die die Seiltrume bildenden Endabschnitte des Seils über die in der hohlen Querstrebe gelagerten Umlenkrollen aus dem Seilspeicher aus- und einziehbar sind. Durch diese Maßnahmen wird sichergestellt, dass alle für die Spanngurtführung erforderlichen Konstruktionsteile innerhalb der hohlen Querstrebe im Deckenbereich des Fahrzeugaufbaus untergebracht werden können, sodass auch der Spanngurt in seiner den Laderaum zur Ladung freigebenden Ausgangsstellung zwischen den beiden in der Querstrebe gelagerten Umlenkrollen unmittelbar unterhalb der Querstrebe von einer Längswand zur gegenüberliegenden Längswand des Fahrzeugaufbaus geführt werden kann.

In der Zeichnung ist der Erfindungsgegenstand beispielsweise dargestellt. Es zeigen
- Fig. 1: einen Fahrzeugaufbau mit einer erfindungsgemäßen Vorrichtung zur Ladegutsicherung in einer schematischen Ansicht in Fahrzeuglängsrichtung,
- Fig. 2: eine Querstrebe mit dem Seilspeicher für das die beiden am Spanngurt angreifenden Seiltrume bildende Seil in einem Längsschnitt in einem größeren Maßstab,
- Fig. 3: einen Schnitt durch eine Gurtaufnahme in Führungsrichtung des Spanngurts in einem größeren Maßstab und
- Fig. 4: Dir Gurtaufnahme in einem Schnitt nach der Linie IV-IV der Fig. 3.

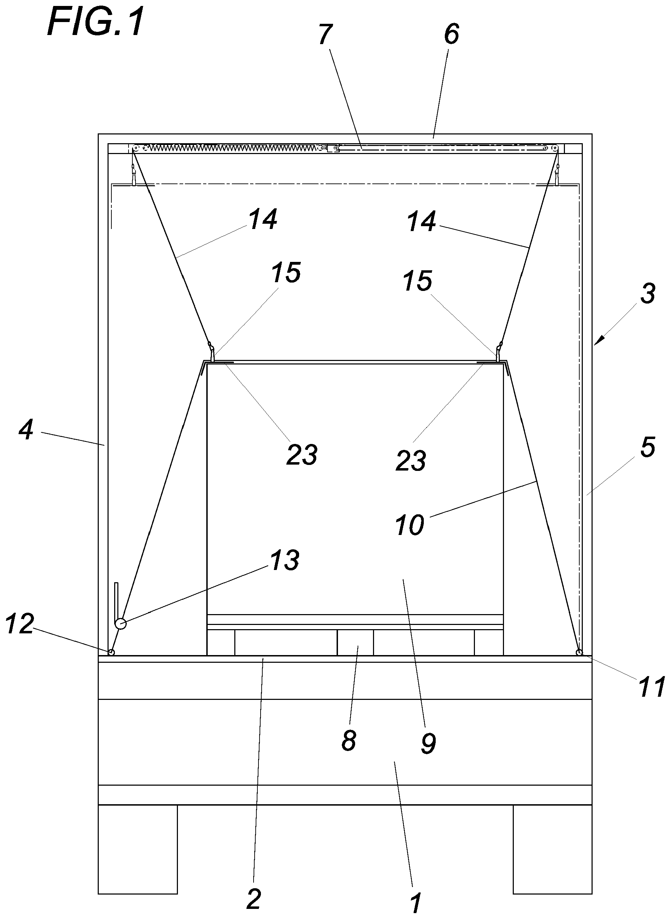

Das Fahrzeug 1 gemäß der Fig. 1 weist eine Ladefläche 2 mit einem Fahrzeugaufbau 3 auf, der zwei einander gegenüberliegende Längswände 4, 5 und eine die Längswände 4, 5 verbindende Decke 6 umfasst. Dieser Fahrzeugaufbau 3 kann z. B. als Gestell für eine Plane ausgeführt sein, die im Bereich der Decke 6 auf Querstreben 7 abgestützt ist. Das Beladen erfolgt auf einer Längsseite des Fahrzeugs 1, im dargestellten Ausführungsbeispiel durch die geöffnete Längswand 4. Das auf einer Palette 8 aufruhende Ladegut 9 wird mithilfe wenigstens eines Spanngurts 10 gesichert, der auf der der Ladeseite gegenüberliegenden Längsseite des Fahrzeugs 1 im Bereich der Längswand 5 an einem Anschlagpunkt 11 der Ladefläche 2 angeschlagen ist und über das Ladegut 9 auf die gegenüberliegende Längsseite der Ladefläche 2 geführt wird, um durch eine an einem dem Anschlagpunkt 11 gegenüberliegenden Anschlagpunkt 12 der Ladefläche 2 angreifende Spanneinrichtung 13 unter einem Niederspannen des Ladeguts 9 gegenüber der Ladefläche 2 festgezurrt zu werden.

Zum Freigeben des in dieser Weise gesicherten Ladeguts 9 wird die Spanneinrichtung 13, beispielsweise ein Ratschenhebel, gelöst und das freie Ende des Spanngurts 10 aus der Spanneinrichtung 13 gezogen, sodass der Spanngurt 10 durch zwei an ihm angreifende Seiltrume 14 gegen die Decke 6 des Fahrzeugaufbaus 3 gezogen werden kann. Die Seiltrume 14, die an ihrem freien Ende mit einer den Spanngurt 10 in Längsrichtung verschiebbar führenden Gurtaufnahme 15 versehen sind, sind um Umlenkrollen 16 im Endbereich einer hohl ausgebildeten Querstrebe 7 zu einem Seilspeicher 17 geführt, der einen in der Querstrebe 7 verschiebefest gehaltenen Seilrollensatz 18 und einen entlang der Querstrebe 7 verschiebbar gelagerten Seilrollensatz 19 umfasst, zwischen welchen Seilrollensätzen 18, 19 das mit seinen Enden die Seiltrume 14 bildende Seil 20 schlaufenbildend hin- und hergeführt ist. Die Anordnung ist dabei so getroffen, dass der Seilrollensatz 19 in einem Schlitten 21 gelagert ist, der von einer in der Querstrebe angeordneten Zugfeder 22 im Sinne eines Einziehens der am Spanngurt 10 angreifenden Seiltrume 14 beaufschlagt wird.

Aufgrund des federbeaufschlagten Seilspeichers 17 wird der Spanngurt 10 nach einem Lösen von der Spanneinrichtung 13 in eine in Fig. 1 strichpunktiert angedeutete Ausgangsstellung angehoben, in der der Spanngurt 10 unterhalb der Querstrebe 7 von der Längswand 5 zur Längswand 4 verläuft. Zum Festzurren eines Ladeguts 9 braucht somit der Spanngurt 10 nur aus dieser Ausgangslage an seinem freien Ende erfasst und zur Spanneinrichtung 13 gezogen und dann mithilfe der Spanneinrichtung festgezurrt zu werden, sodass sich der Spanngurt 10 über das Ladegut 9 spannt und das Ladegut 9 an die Ladefläche 2 angedrückt gegen eine Verlagerung auf der Ladefläche 2 sichert.

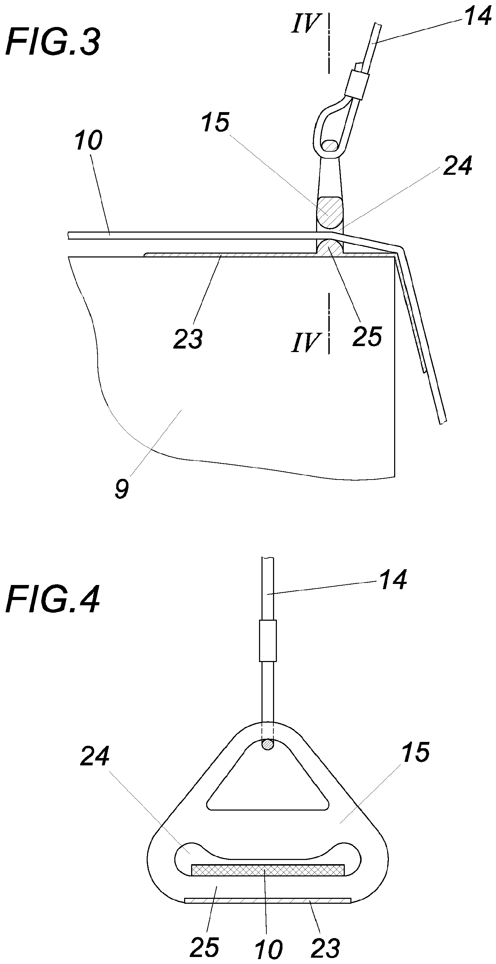

Damit das Ladegut 9 beim Festzurren des Spanngurts 10 nicht durch die Gurtaufnahme 15 beschädigt werden kann, ist die Gurtaufnahme 15 auf der vom Seiltrum 14 abgekehrten Seite mit einem streifenförmigen, biegeelastischen Kantenschutz 23 versehen, der in Führungsrichtung des Spanngurts 10 beidseitig über die Gurtaufnahme 15 vorsteht und die Gurtaufnahme 15 mit dem Spanngurt 10 gegenüber dem Ladegut 9 abdeckt. Einfache Konstruktionsverhältnisse werden in diesem Zusammenhang dadurch sichergestellt, dass die Gurtaufnahmen 15 gemäß den Fig. 3 und 4 eine Durchtrittsöffnung 24 für den Spanngurt 10 bilden, die auf der vom Seiltrum 14 abgekehrten Seite durch einen den streifenförmigen Kantenschutz 23 tragenden Auflageschenkel 25 für den Spanngurt 10 begrenzt ist. Der von diesem Auflageschenkel 25 beidseitig abstehende Kantenschutz 23 wird gemäß der Fig. 3 beim Festzurren des Spanngurts 10 an das Ladegut 9 angedrückt und im Rahmen seiner Biegeelastizität um die Ladegutkante gebogen, sodass das Ladegut 9 im hierfür besonders empfindlichen Kantenbereich vorteilhaft geschützt wird.

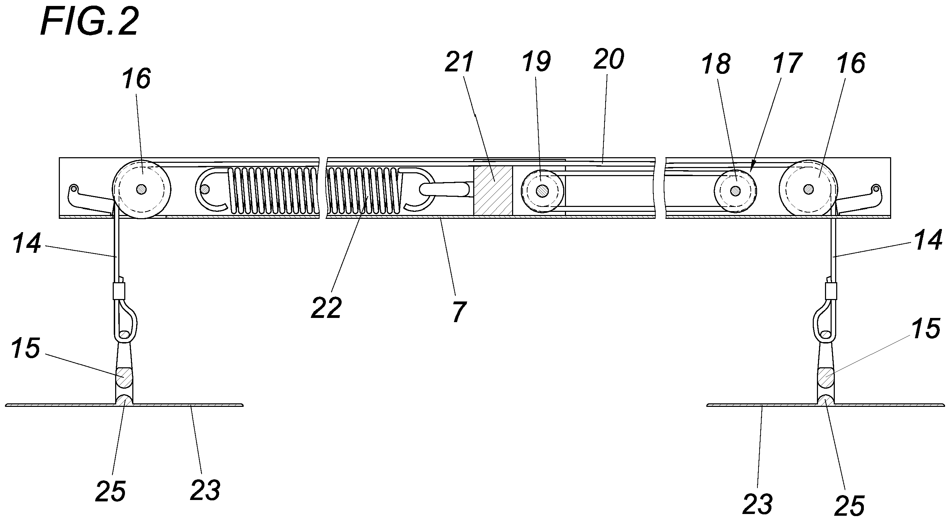

Damit beim Lösen der Spanneinrichtung 13 der Spanngurt 10 nicht durch die federbeaufschlagten Seiltrume 14 gegen die Decke 6 des Fahrzeugaufbaus 3 nach oben unkontrolliert mitgenommen werden kann, ist den Umlenkrollen 16 für die Seiltrume 14 je eine Rücklaufbremse 26 zugeordnet. Diese Rücklaufbremse 26 kann in einfacher Art durch einen Bremshebel gebildet werden, wie dies die Fig. 2 zeigt.

## Patentansprüche

1. Fahrzeugaufbau (3) mit einer Vorrichtung zur Ladegutsicherung, die einen an Anschlagpunkten (11, 12) auf einander gegenüberliegenden Längsseiten einer Ladefläche (2) angeschlagenen, mit einer Spanneinrichtung (13) versehenen Spanngurt (10) sowie eine Spanngurtführung umfasst, die zwei um Umlenkrollen (16) im Eckbereich zwischen den Längswänden (4, 5) und der Decke (6) des Fahrzeugaufbaus (3) aus einem Seilspeicher (17) gegen Federkraft ausziehbare Seiltrume (14) aufweist, die an ihren ausziehbaren Enden eine den Spanngurt (10) verschiebbar führende Gurtaufnahme (15) tragen, **dadurch gekennzeichnet, dass** die Gurtaufnahmen (15) auf der vom Seiltrum (14) abgekehrten Seite einen beidseitig in Führungsrichtung des Spanngurts (10) über die Gurtaufnahme (15) vorstehenden, biegeelastischen, streifenförmigen Kantenschutz (23) ausbilden.

2. Fahrzeugaufbau nach Anspruch 1, **dadurch gekennzeichnet, dass** die Gurtaufnahmen (15) eine Durchtrittsöffnung (24) für den Spanngurt (10) bilden, die auf der vom Seiltrum (14) abgekehrten Seite durch einen den streifenförmigen Kantenschutz (23) tragenden Auflageschenkel (25) begrenzt ist.

3. Fahrzeugaufbau nach Anspruch 1 oder 2, **dadurch gekennzeichnet, dass** die beiden Seiltrume (14) Endabschnitte eines Seils (20) bilden, dessen in einer hohlen Querstrebe (7) der Decke (6) angeordneter Seilspeicher (17) einen verschiebefest und einen gegen Federkraft verschiebbar in der Querstrebe (7) gelagerten Seilrollensatz (18, 19) umfasst, und dass die die Seiltrume (14) bildenden Endabschnitte des Seils (20) über die in der hohlen Querstrebe (7) gelagerten Umlenkrollen (16) aus dem Seilspeicher (17) aus- und einziehbar sind.
